# EUROPEAN PATENT SPECIFICATION

(11) **EP 4 314 545 B1**
(45) Date of publication and mention of the grant of the patent: **12.11.2025**
(21) Application number: 22713864.1
(22) Date of filing: 14.03.2022
(51) Int. Cl.: F03D 7/02, F03D 7/04, F03D 17/00, H02J 3/38

(54) **OPERATING A WIND TURBINE IN A WIND POWER PLANT DURING LOSS OF COMMUNICATION**
BETRIEB EINER WINDENERGIEANLAGE BEI KOMMUNIKATIONSVERLUST
FONCTIONNEMENT D'UNE ÉOLIENNE DANS UNE CENTRALE ÉLECTRIQUE PENDANT LA PERTE DE COMMUNICATION

(30) Priority: 29.03.2021 DK PA202170151
(43) Date of publication of application: 07.02.2024
(73) Proprietor: VESTAS WIND SYSTEMS A/S, 8200 Aarhus N (DK)
(72) Inventor: NAYEBI, Kouroush, 8200 Aarhus N (DK); KAPPELGAARD, Søren, 8200 Aarhus N (DK)
(74) Representative: Vestas Patents Department
(86) International application number: PCT/DK2022/050046
(87) International publication number: WO 2022/207046

(56) References cited:
- EP-A1- 2 599 995
- US-A1- 2014 375 052
- US-A1- 2016 090 965
- US-A1- 2016 315 475

## Description

### FIELD OF THE INVENTION

The present invention relates to a method for operating a wind turbine in a wind power plant during loss of communication between the wind turbine and the power plant controller.

### BACKGROUND OF THE INVENTION

When operating a wind turbine in a wind power plant delivering energy to a utility grid, communication loss between the wind turbine and the wind power plant may occur. The communication loss may be caused by failure of the communication, where a fault may occur interrupting the communication. However, the communication loss may also be caused by a planned repair or update of the wind turbine or the power plant controller.

During a communication loss, the wind turbine usually will close down and stop producing power. However, when a wind turbine stops producing power this will affect the total production of the wind park for a utility grid, further, stopping the wind turbine may affect the stability of the utility grid.

Hence, an improved method to control a wind turbine during a communication loss would be advantageous, and in particular, a more efficient and/or reliable method to reduce the impact on power generation for the utility grid would be advantageous. Document EP 2 599 995 A1 shows an example of a method to control a wind turbine during a communication loss.

### OBJECT OF THE INVENTION

In particular, it may be seen as an object of the present invention to provide a method controlling the wind turbine during a communication loss between the wind turbine and the wind power plant reducing the impact of the communication loss on the power production.

### SUMMARY OF THE INVENTION

Thus, the above described object and several other objects are intended to be obtained in a first aspect of the invention by providing a method according to claim 1 for operating a wind turbine in a wind power plant; the wind power plant comprises a power plant controller, the method comprising the steps of
- detecting by the wind turbine a communication loss between the wind turbine and the power plant controller,
- entering a fallback operation mode of the wind turbine in case of detecting the communication loss,
- wherein the fallback operation mode comprises ramping the power production of the wind turbine to a predefined fallback set point.

The wind turbine comprises a control system. During normal operation, the control system may receive operating set points from the power plant controller, and the control system may then control the power generation of the wind turbine according to the operation set points received from the power plant controller.

However, if a communication loss occurs between the wind turbine and the power plant controller, the wind turbine is controlled by its control system without receiving operation set points from the power plant controller. Thus, when a communication loss between the wind turbine and the power plant controller is detected, the wind turbine enters a fallback operation mode. When in fallback operation mode the wind turbine is operating to control the power production according to a predefined fallback set point. There may be more than one predefined fallback operation set points, such as both an active power and a reactive power set point.

The control system is part of the wind turbine, so when writing the wind turbine is doing something, for instance detecting a communication loss or receiving set points, it is to be understood that it may be the wind turbines control system that is doing it.

The wind power plant may comprise two or more wind turbines and the power plant controller is controlling the wind power plant and is in communication with the individual wind turbines sending operation set points to the individual wind turbines and exchanging data with the individual wind turbines.

The communication loss may, for example be detected by the wind turbine by not receiving any communication from the power plant controller for a time period, the time period may be between 500 ms to 1, 2, 3, 5 or 10 seconds, or any suitable time period, which is adjustable by the power plant operator.

When entering the fallback operation mode, after detecting a communication loss, the wind turbine is ramping the power production of the wind turbine to the predefined fallback set point. It is then possible to operate the turbine at a predefined safe operation point, where the wind turbine produces power without loading the wind turbine unnecessary, during the communication loss. The predefined fallback set points may be stored in memory of the wind turbines control system to be used in case of a communication loss. The predefined fallback set point may preferable be an active power set point. Ramping the power production of the wind turbine to the predefined fallback set point may be done by gradually changing the power production of the wind turbine until the power production matches the predefined fallback set point. Alternatively, the predefined fallback set point may be a reactive power set point, a voltage set point, or a power factor set point. The wind turbine may have several predefined fallback set points stored in memory, and if a communication loss occur, selects one or a plurality of the predefined fallback set points.

The invention is particularly, but not exclusively, advantageous for obtaining that the wind turbine will be able to ride through a short-term communication loss with minor impact on power generation. Further, the fallback operation mode can be used during system maintenance without shutting down the wind turbine. Thus, the invention can be used for example during software update of the power plant controller where the power plant controller will not be in operation for a short period of time.

Normally the power plant controller is constantly monitoring the power production of the wind power plant by measuring the power transmitted to the utility grid. If there is a reduction in power production, which may be caused by a communication loss with a wind turbine, the power plant controller may instruct other wind turbines to increase power production to compensate for the reduced power production.

According to an embodiment, the method further comprises ramping power production of the the wind turbine to the predefined fallback set point is performed with a predefined ramp rate or within a predefined time.

The reduction of the active power production may be done gradually by ramping the power production of the wind turbine down by a predefined ramp rate, alternatively the ramping down of the power will be done within a predefined time; in this case, a ramp rate may be calculated for the wind turbine to ramp down the power within the predefined time. The predefined time may be 5, 10, 15, 20, 30 minutes or any suitable time. The predefined time is adjustable by the power plant operator.

The ramping of the power production of the wind turbine to a fallback set point can be done fast or slow depending on the utility grid and the capabilities of the other wind turbines in the wind power plant to compensate for the power changes due to the communication loss.

According to an embodiment, upon detecting the communication loss, the method comprises entering the fallback operation mode after a set time delay.

When a communication loss is detected, the wind turbine may enter the fallback operation mode after a set time delay. In case the communication loss is only a glitch, the communication may be re-established within seconds, therefore only if the communication loss last more than a set time delay will the wind turbine enter the fallback operation mode. The set time delay may be 10 minutes, but may be any suitable time like 5, 15, 20, 30 minutes. The set time delay may be adjustable by the plant operator.

Alternatively or additionally, upon detecting the communication loss, the method may comprise entering the fallback operation mode immediately, but only after a time delay the wind turbine in fallback operation mode begins to ramp down the power production towards the predefined fallback set point, in case communication loss is re-established.

According to an embodiment, the method further comprises reducing the set time delay with a predefined reduction factor, if the communication loss is not planned.

If the communication loss is unplanned, it may be caused by a fault in the system. When there is a fault in the system it may be preferable to have a shorter time delay before starting ramping to the fallback set point. Therefore, the time delay may be reduced, for instance the time delay may be reduced by a reduction factor. The predefined reduction factor may by ¼, ½, ¾ or it may be completely eliminated. The reduction factor may be adjustable by the power plant operator to any suitable factor. Also ramping the power production to the fallback set point may preferable be done faster when there is a fault in the system. For a planned communication loss there may be a maintenance reference set in the wind turbines control system showing the communication loss is planned, or a message is sent to the wind turbine before the planned communication loss.

According to an embodiment, the predefined fallback set point is determined such that the loads on the wind turbine are lowered when entering the fallback operation mode.

It may be preferable to determine the predefined fallback set point so that the loads on the turbine are lowered when entering the fallback operation mode. It may be advantageous that the wind turbine enters a setup that lessens the load on the wind turbine. According to an embodiment, a wind turbine load model may be used to determine the loads on the turbine. From experience and/or calculations a wind turbine model may be constructed from which a fallback set point may be determined where the load on the wind turbine is minimized.

According to an embodiment, the predefined fallback set point is determined such that the power production of the wind turbine is ramped down or up to the predefined fallback set point wherein the loads on the wind turbine are at a local minimum.

The predefined fallback set point may be determined by finding the local minimum for the loads on the wind turbine and selecting the fallback set point to be at a local load minimum.

According to the invention, the predefined fallback set point is chosen from a set of fallback set points each being a set point wherein the loads on the wind turbine are at a local minimum.

When analysing the loads on the wind turbine several local minimums may be determined for the load on the wind turbine for different operation set points.

These different set points may be saved in the wind turbine controller as a set of possible fallback set points, and when entering the fallback operation mode, the wind turbine controller may select one of the set of fallback set points. It could be based on the on current operation conditions of the wind turbine.

According to an embodiment, the predefined fallback set point is chosen to be the closest set point of the set of fallback set points.

The predefined fallback set point, selected from the set of fallback set points, may be the set point closest to the current power production of the wind turbine. By choosing the closest fallback set point the change in power production is minimised.

According to the invention, the predefined fallback set point is chosen to be the set point of the set of fallback set points that is reached first when ramping power production down.

The predefined fallback set point selected from the set of fallback set points may be the set point, which is the closest set point that is also smaller than the current power production of the wind turbine.

According to an embodiment, the method comprises the step of shutting down the wind turbine after entering the fallback operation mode if communication is not re-established after a given time.

When entering the fallback operation mode, a timer may be started, and when the timer runs out after a given time, the wind turbine shuts down power production and stops delivering power for the utility grid. The longer time the wind turbine is disconnected from communicating with the power plant controller the greater is the risk that the wind turbine is not delivering a desirable amount of power and will destabilize the grid, therefore after some time the wind turbine is shutting down. This may preferable be after 10 minutes, but may be any suitable time like 5, 15, 20, 30 minutes. The set time delay may be adjustable by the plant operator. Alternatively, the wind turbine may not completely shut down production when the timer runs out, it may reduce the power production to a lower level, for instance to a lower fallback set point and it may then restart the timer.

If the communication loss is not planned, the given time for a shutdown of the wind turbine may be smaller than at a planned communication loss.

According to an embodiment, the method comprises the step of ramping the power production of the wind turbine to an operation set point received from the power plant controller when the communication is re-established.

When after a communication loss the communication is re-established, the wind turbine will correct the power production to fit the demands of the power plant. After re-establishing communication, the wind turbine receives an operation set point from the power plant and the wind turbine will ramp the power production to fit the operation set point. The ramp rate could be determined based on the fallback set point and/or the received operation set point and/or be based on a predetermined time-period.

Alternatively, according to an embodiment, the method comprises the step of, when communication is re-established, ramping the power production of the wind turbine toward the last known operation set point from before the communication loss was detected.

It may take some time for the power plant controller to calculate and send an operation set point to the wind turbine after communication is re-established.

While waiting for the operation set point from the power plant controller, the wind turbine may use the last known operation set point from before the communication loss was detected, assuming that the last received operation set point will be near the operation set point soon to be received from the power plant controller.

According to an embodiment, the method comprises leaving the fallback operation mode when receiving the operation set point or a time-period after receiving the operation set point. When communication is re-established and the wind turbine receives an operation set point from the power plant controller, the wind turbine may leave the fallback operation mode and goes back to normal operation. However, the wind turbine may not immediately resume normal operation, it will slowly ramp the power production to meet the operation set point, and also the wind turbine may wait a time-period before returning to normal operation. To return to normal operation to fast may cause instabilities in the power production, time may be required for the other wind turbines to adjust the power production to meet the utility grid requirements when a wind turbine is returning to normal operation after being in fallback operation mode for a while.

Also, according to an embodiment, the wind turbine stays in fallback operation mode, until the power production for the wind turbine reached the operation set point or a time-period after it reaches the operation set point. In this case the wind turbine do stay in fallback operation mode until normal power production has been re-established, indicating that the situation is not back to normal until the power production comply with the operation set point received from the power plant controller.

In a second aspect, the invention relates to a control system for operating a wind turbine during a communication loss, wherein the control system is arranged to perform the steps according to the method of the first aspect of the invention.

In a third aspect, the invention relates to a wind turbine comprising a control system for operating the wind turbine during a communication loss, according to the second aspect of the invention.

In a fourth aspect, the invention relates to a computer program product being adapted to enable a computer system comprising at least one computer having data storage means in connection therewith to control an wind turbine according to the first aspect of the invention, such as a computer program product comprising instructions which, when the program is executed by a computer, cause the computer to carry out the method of the first aspect of the invention.

This aspect of the invention is particularly, but not exclusively, advantageous in that the present invention may be accomplished by a computer program product enabling a computer system to carry out the operations of the wind turbine of the first aspect of the invention when down- or uploaded into the computer system. Such a computer program product may be provided on any kind of computer readable medium, or through a network.

The individual aspects of the present invention may each be combined with any of the other aspects. These and other aspects of the invention will be apparent from the following description with reference to the described embodiments.

### BRIEF DESCRIPTION OF THE FIGURES

The wind power plant and the method to control the wind power plant according to the invention will now be described in more detail with regard to the accompanying figures. The figures show one way of implementing the present invention and is not to be construed as being limiting to other possible embodiments falling within the scope of the attached claim set.
Fig. 1 shows a wind turbine.
Fig. 2 shows an overview of the communication between the power plant controller and the wind turbines in the wind power plant.
Fig. 3 is a flow-chart of a method according to the invention.
Fig. 4 shows a state diagram of the method for controlling the wind turbine.

### DETAILED DESCRIPTION OF AN EMBODIMENT

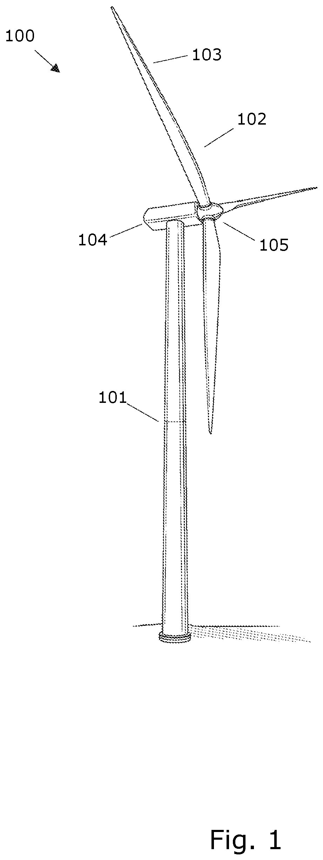

Fig. 1 shows a wind turbine 100 comprising a tower 101 and a rotor 102 with at least one rotor blade 103, such as three blades, extending from the hub 105. The rotor is connected to a nacelle 104, which is mounted on top of the tower 101 and being adapted to drive a generator situated inside the nacelle via a drive train. The rotor 102 is rotatable by action of the wind. The wind induced rotational energy of the rotor blades 103 is transferred via a shaft to the generator. Thus, the wind turbine 100 is capable of converting kinetic energy of the wind into mechanical energy by means of the rotor blades and, subsequently, into electric power by means of the generator. The generator is connected with a power converter, which comprises a generator side converter and a line side converter. The generator side converter converts the generator AC power into DC power and the line side converter converts the DC power into an AC power for injection into the utility grid. Moreover, the wind turbine 100 comprises a control system. The control system may be placed inside the nacelle 104 or distributed at a number of locations inside the turbine 100 and communicatively connected.

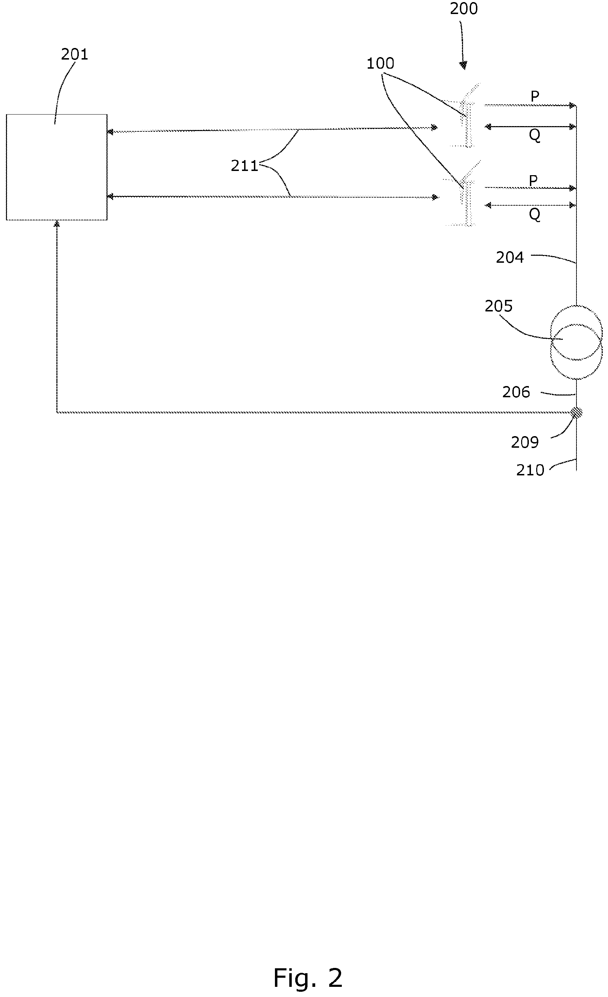

Fig. 2 shows an overview of the communication between the power plant controller 201 and the wind turbines 100 in the wind power plant 200. The wind turbines 100 are connected to an internal medium voltage network 204 to which the wind turbine 100 are transmitting real power P, and transmitting and receiving reactive power Q. The medium voltage network 204 is connected to a transformer 205, wherein the voltage is transformed from the medium voltage network 204 to a high voltage network 206, which is connected to the utility grid 210 through a point of common coupling 209.

The power plant controller 201 is measuring real power, reactive power, voltage and other relevant data at, or near, the point of common coupling 209. The power plant controller 201 may generate set points for the wind turbines 100 based on the measured values at, or near, the point of common coupling and preferably also based on operation parameters of wind turbines 100. The power plant controller 201 is communicating with the wind turbines 100 through the communication lines 211, which may be wireless. The communication may be operation set points sent from the power plant controller 201 to the wind turbines 100 and relevant operation parameter sent from the from the wind turbines 100 to the power plant controller 201.

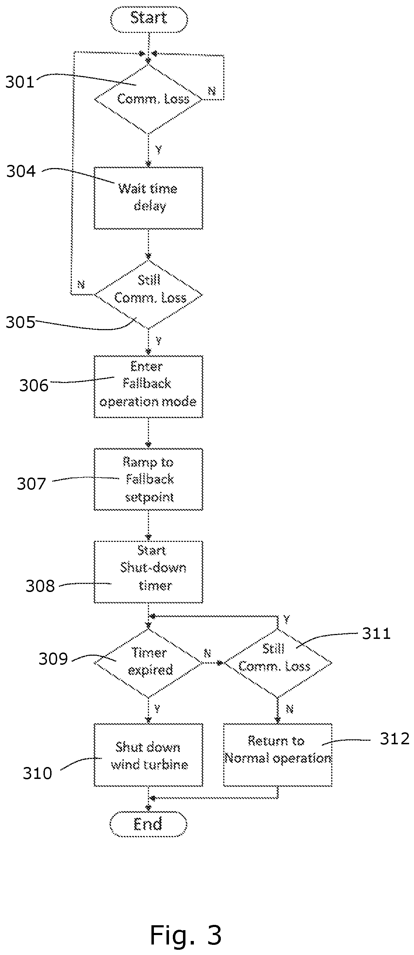

Fig. 3 shows an example of a possible implementation of the method of the invention. The control system of a wind turbine is constantly monitoring for a communication loss 301 between the wind turbine and the power plant controller. The communication loss may be detected by not receiving any communication from the power plant controller within a time period, for instance within 500 ms. When a communication loss is detected, the control system of the wind turbine may wait for a set time delay 304, for instance five or ten seconds, and if still not receiving any communications from the power plant controller, the control system realizes there still is a communication loss 305. The communication loss may be just a glitch and the communication may be re-established after a short time, perhaps only a few seconds. If communication is not re-established after a short time within the set time delay, the wind turbine enters the fallback operation mode 306. When in fallback operation mode the wind turbine control system selects a predefined fallback set point and ramps the power production to the fallback set point 307. The predefined fallback set point selected may be selected from a set of fallback set points, where each set point represent a local minimum in the load on the wind turbine. Ramping the power production to the fallback set point may be done fast or slow, for example, depending in whether it is a planned or an unplanned communication loss. Further, when entering the fallback operation mode, the wind turbine control system starts a shutdown timer 308. If the shutdown timer expires 309, the wind turbine is shut down 310 If the shutdown timer does not expire, and it is detected that the communication loss has ended 311 and communication is re-established, the wind turbine returns to normal operation 312. Ending of the communication loss is determined by the wind turbine when it again receives a operation set point from the power plant controller. The wind turbine will then return to normal operation and ramps the power production to meet the received operation set point.

Of course, the method may be implemented in different ways than described above, as there are many ways to make an embodiment according to the method of this invention.

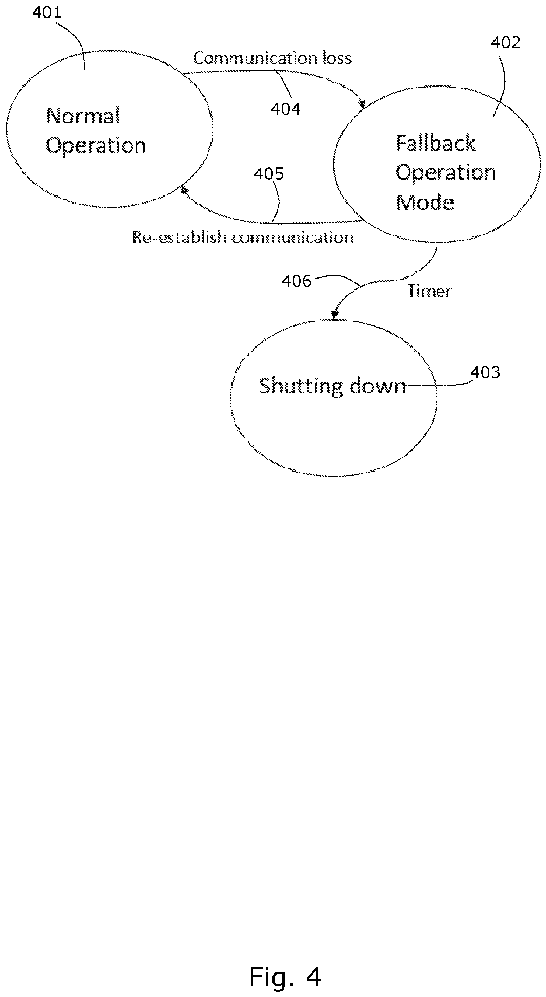

Fig. 4 shows a state diagram of the method for controlling the wind turbine. The wind turbine is operating in normal operation 401, but when a communication loss 404 occurs, the wind turbine changes to fallback operation mode 402. When entering fallback operation mode a timer is started and after a given time, the wind turbine is shutting down 403. However, if communication is reestablished 405 before the given time has elapsed, the wind turbine returns to normal operation 401.

Although the present invention has been described in connection with the specified embodiments, it should not be construed as being in any way limited to the presented examples. The scope of the present invention is set out by the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

## Claims

1. A method for operating a wind turbine in a wind power plant, the wind power plant (200) comprises a power plant controller (201), the method comprising the steps of
- detecting by the wind turbine (100) a communication loss between the wind turbine and the power plant controller (201),
- entering a fallback operation mode (402) of the wind turbine (100) in case of detecting the communication loss,
- wherein the fallback operation mode (402) comprises ramping the power production of the wind turbine (100) to a predefined fallback set point;
**characterized in that** the predefined fallback set point is chosen from a set of fallback set points each being a set point wherein the loads on the wind turbine (100) are at a local minimum, and
wherein the predefined fallback set point is chosen to be the set point of the set of fallback set points that is reached first when ramping power production down.

2. The method according to claim 1, wherein ramping the power production of the wind turbine (100) to the predefined fallback set point is performed with a predefined ramp rate or within a predefined time.

3. The method according to claim 1 or 2, wherein upon detecting the communication loss, the method comprises entering the fallback operation mode (402) after a set time delay.

4. The method according to claim 3, wherein the method comprises reducing the set time delay with a predefined reduction factor, if the communication loss is not planned.

5. The method according to claims 1-4, wherein the predefined fallback set point is determined such that the loads on the wind turbine (100) are lowered when entering the fallback operation mode (402).

6. The method according to claims 1-5, wherein the predefined fallback set point is determined such that the power production of the wind turbine (100) is ramped down to the predefined fallback set point wherein the loads on the wind turbine are at a local minimum.

7. The method according to claims 1-6, wherein the predefined fallback set point is chosen to be the closest set point of the set of fallback set points.

8. The method according to any of the preceding claims, wherein the method comprises the step of shutting down (403) the wind turbine (100) after entering the fallback operation mode if communication is not re-established after a given time.

9. The method according to any of the preceding claims, wherein the method comprises the step of ramping the power production of the wind turbine (100) to an operation set point received from the power plant controller when the communication is re-established.

10. The method according to claim 9, wherein ramping the power production of the wind turbine (100) to an operation set point is performed with a predefined ramp rate or within a predefined time.

11. A control system for operating a wind turbine during a communication loss, wherein the control system is arranged to perform the steps according to the method of any of claims 1-10.

12. A wind turbine comprising a control system for operating the wind turbine (100) during a communication loss, according to claim 11.

13. A computer program product comprising software code adapted to control a wind turbine (100) when executed on a data processing system, the computer program product being adapted to perform the method of any of the claims 1-10.

## Patentansprüche

1. Verfahren zum Betreiben einer Windkraftanlage in einem Windpark, wobei der Windpark (200) eine Parksteuervorrichtung (201) umfasst, wobei das Verfahren die Schritte umfasst
- Erfassen, durch die Windkraftanlage (100), eines Kommunikationsverlusts zwischen der Windkraftanlage und der Parksteuervorrichtung (201),
- Eintreten in einen Auffangbetriebsmodus (402) der Windkraftanlage (100) im Fall des Erfassens des Kommunikationsverlusts,
- wobei der Auffangbetriebsmodus (402) Hochregeln der Leistungserzeugung der Windkraftanlage (100) auf einen vordefinierten Auffangsollwert umfasst;
**dadurch gekennzeichnet, dass**
der vordefinierte Auffangsollwert aus einem Satz von Auffangsollwerten ausgewählt wird, wobei jeder ein Sollwert ist, wobei die Belastungen der Windkraftanlage (100) bei einem lokalen Minimum liegen, und
wobei der vordefinierte Auffangsollwert als der Sollwert aus dem Satz von Auffangsollwerten ausgewählt wird, der beim Herunterregeln der Leistungserzeugung zuerst erreicht wird.

2. Verfahren nach Anspruch 1, wobei das Regeln der Leistungserzeugung der Windkraftanlage (100) auf den vordefinierten Auffangsollwert mit einer vordefinierten Regelrate oder innerhalb einer vordefinierten Zeit durchgeführt wird.

3. Verfahren nach Anspruch 1 oder 2, wobei das Verfahren nach Erfassen des Kommunikationsverlusts ein Eintreten in den Auffangbetriebsmodus (402) nach einer festgelegten Zeitverzögerung umfasst.

4. Verfahren nach Anspruch 3, wobei das Verfahren Reduzieren der festgelegten Zeitverzögerung mit einem vordefinierten Reduktionsfaktor umfasst, wenn der Kommunikationsverlust nicht geplant ist.

5. Verfahren nach den Ansprüchen 1-4, wobei der vordefinierte Auffangsollwert derart bestimmt wird, dass die Belastungen der Windkraftanlage (100) beim Eintreten in den Auffangbetriebsmodus (402) gesenkt werden.

6. Verfahren nach den Ansprüchen 1-5, wobei der vordefinierte Auffangsollwert derart bestimmt wird, dass die Leistungserzeugung der Windkraftanlage (100) auf den vordefinierten Auffangsollwert heruntergeregelt wird, wobei die Belastungen der Windkraftanlage bei einem lokalen Minimum liegen.

7. Verfahren nach den Ansprüchen 1-6, wobei der vordefinierte Auffangsollwert als der nächstgelegene Sollwert aus dem Satz von Auffangsollwerten ausgewählt wird.

8. Verfahren nach einem der vorstehenden Ansprüche, wobei das Verfahren den Schritt des Herunterfahrens (403) der Windkraftanlage (100) nach Eintreten in den Auffangbetriebsmodus umfasst, wenn die Kommunikation nach einer gegebenen Zeit nicht wiederhergestellt wird.

9. Verfahren nach einem der vorstehenden Ansprüche, wobei das Verfahren den Schritt des Regelns der Leistungserzeugung der Windkraftanlage (100) auf einen Betriebssollwert umfasst, der von der Parksteuervorrichtung empfangen wird, wenn die Kommunikation wiederhergestellt ist.

10. Verfahren nach Anspruch 9, wobei das Regeln der Leistungserzeugung der Windkraftanlage (100) auf einen Betriebssollwert mit einer vordefinierten Regelrate oder innerhalb einer vordefinierten Zeit durchgeführt wird.

11. Steuersystem zum Betreiben einer Windkraftanlage während eines Kommunikationsverlusts, wobei das Steuersystem dazu eingerichtet ist, die Schritte gemäß dem Verfahren nach einem der Ansprüche 1-10 durchzuführen.

12. Windkraftanlage, die ein Steuersystem zum Betreiben der Windkraftanlage (100) während eines Kommunikationsverlusts nach Anspruch 11 umfasst.

13. Computerprogrammprodukt, umfassend Softwarecode, der dazu angepasst ist, eine Windkraftanlage (100) zu steuern, wenn auf einem Datenverarbeitungssystem ausgeführt, wobei das Computerprogrammprodukt dazu angepasst ist, das Verfahren nach einem der Ansprüche 1-10 durchzuführen.

## Revendications

1. Procédé de fonctionnement d'une éolienne dans une centrale éolienne, la centrale éolienne (200) comprenant un dispositif de commande de centrale électrique (201), le procédé comprenant les étapes consistant à
- détecter, au moyen de l'éolienne (100), une perte de communication entre l'éolienne et le dispositif de commande de centrale électrique (201),
- entrer dans un mode de fonctionnement de repli (402) de l'éolienne (100) en cas de détection de la perte de communication,
- dans lequel le mode de fonctionnement de repli (402) comprend l'augmentation de la production d'énergie de l'éolienne (100) jusqu'à un point de consigne de repli prédéfini ;
**caractérisé en ce que**
le point de consigne de repli prédéfini est choisi parmi un ensemble de points de consigne de repli, chacun étant un point de consigne dans lequel les charges sur l'éolienne (100) sont à un minimum local, et
dans lequel le point de consigne de repli prédéfini est choisi pour être le point de consigne de l'ensemble de points de consigne de repli qui est atteint en premier lors de la réduction de la production d'énergie.

2. Procédé selon la revendication 1, dans lequel l'augmentation de la production d'énergie de l'éolienne (100) jusqu'au point de consigne de repli prédéfini est effectuée avec une vitesse d'augmentation prédéfinie ou dans un temps prédéfini.

3. Procédé selon la revendication 1 ou 2, dans lequel, lors de la détection de la perte de communication, le procédé comprend l'entrée dans le mode de fonctionnement de repli (402) après un retard défini.

4. Procédé selon la revendication 3, dans lequel le procédé comprend la réduction du retard défini avec un facteur de réduction prédéfini, si la perte de communication n'est pas planifiée.

5. Procédé selon les revendications 1-4, dans lequel le point de consigne de repli prédéfini est déterminé de telle sorte que les charges sur l'éolienne (100) soient abaissées lors de l'entrée dans le mode de fonctionnement de repli (402).

6. Procédé selon les revendications 1-5, dans lequel le point de consigne de repli prédéfini est déterminé de telle sorte que la production d'énergie de l'éolienne (100) soit réduite jusqu'au point de consigne de repli prédéfini dans lequel les charges sur l'éolienne sont à un minimum local.

7. Procédé selon les revendications 1-6, dans lequel le point de consigne de repli prédéfini est choisi pour être le point de consigne le plus proche de l'ensemble de points de consigne de repli.

8. Procédé selon l'une quelconque des revendications précédentes, dans lequel le procédé comprend l'étape d'arrêt (403) de l'éolienne (100) après l'entrée dans le mode de fonctionnement de repli si la communication n'est pas rétablie après un temps donné.

9. Procédé selon l'une quelconque des revendications précédentes, dans lequel le procédé comprend l'étape d'augmentation de la production d'énergie de l'éolienne (100) jusqu'à un point de consigne de fonctionnement reçu du dispositif de commande de centrale électrique lorsque la communication est rétablie.

10. Procédé selon la revendication 9, dans lequel l'augmentation de la production d'énergie de l'éolienne (100) jusqu'à un point de consigne de fonctionnement est effectuée avec une vitesse d'augmentation prédéfinie ou dans un temps prédéfini.

11. Système de commande pour faire fonctionner une éolienne pendant une perte de communication, dans lequel le système de commande est agencé pour réaliser les étapes selon le procédé selon l'une quelconque des revendications 1-10.

12. Éolienne comprenant un système de commande pour faire fonctionner l'éolienne (100) pendant une perte de communication, selon la revendication 11.

13. Produit de programme informatique comprenant du code logiciel adapté pour commander une éolienne (100) lorsqu'il est exécuté sur un système de traitement de données, le produit de programme informatique étant adapté pour réaliser le procédé selon l'une quelconque des revendications 1-10.
